# EUROPEAN PATENT APPLICATION

(11) **EP 4 386 935 A1**
(43) Date of publication of application: **19.06.2024**
(21) Application number: 21969372.8
(22) Date of filing: 28.12.2021
(51) Int. Cl.: H01M 10/613

(54) **HEAT EXCHANGE PLATE, BATTERY, ELECTRIC APPARATUS, AND FABRICATION METHOD FOR BATTERY**

(71) Applicant: Contemporary Amperex Technology Co., Limited, Ningde, Fujian 352100 (CN)
(72) Inventor: WANG, Liangyi, Ningde, Fujian 352100 (CN); HUANG, Haihua, Ningde, Fujian 352100 (CN)
(74) Representative: Behr, Wolfgang
(86) International application number: PCT/CN2021/142210
(87) International publication number: WO 2023/122994

(57) **Abstract**

This application provides a heat exchange plate for batteries, a battery, an electric apparatus, and a manufacturing method of battery. The heat exchange plate for batteries provided in embodiments of this application includes: a heat exchange plate body, having a cooling zone and a heating zone; and a packaging plate fixedly mounted on the heat exchange plate body, where an accommodating cavity is formed between the packaging plate and the heating zone of the heat exchange plate body, and a heating film is provided in the accommodating cavity. The battery provided in this application includes the foregoing heat exchange plate positioned near each battery cell. Because the heat exchange plate has both a cooling zone and a heating zone, the heat exchange plate can provide both the cooling and heating functions for battery cells. In addition, since the heating film is provided between the packaging plate and the heat exchange plate body, adverse situations like impurities piercing the heating film or the heating film becoming delaminated or burned due to battery cell deformation can be effectively prevented.

## Description

### TECHNICAL FIELD

This application relates to the field of battery technology, and in particular, to a heat exchange plate used for batteries, a battery, an electric apparatus, and a manufacturing method of battery.

### BACKGROUND

Energy conservation and emission reduction are crucial to sustainable development of the automobile industry. In this context, electric vehicles, with their advantages in energy conservation and environmental protection, have become an important part of sustainable development of the automobile industry. For electric vehicles, battery technology is an important factor in connection with their development.

In the development of battery technology, in addition to improving the energy density of batteries, thermal management of batteries is also an important research topic due to its close relationship with the safety of battery usage.

### SUMMARY

This application is completed in view of the above issues, and aims to provide a heat exchange plate for batteries capable of reliably exchanging heat with high safety, a battery, an electric apparatus including the battery, and a manufacturing method of battery.

In order to achieve the above objectives, a first aspect of this application provides a heat exchange plate for battery, including a heat exchange plate body and a packaging plate, the heat exchange plate body has a cooling zone and a heating zone; and the packaging plate is fixedly mounted on the heat exchange plate body, where an accommodating cavity is formed between the packaging plate and the heating zone of the heat exchange plate body, and a heating film is provided in the accommodating cavity.

Because the heating film is packaged between the heat exchange plate body and the packaging plate fixed to the heat exchange plate body, reliable fixation between the heating film and the heat exchange plate body can be ensured while avoiding issues such as delamination and overheating caused by direct contact between the heating film and adjacent battery cells. Such arrangement can also prevent adverse situations such as metal particles piercing the heating film and causing short circuits in the battery cells. Furthermore, the heat exchange plate body is divided into the cooling zone and the heating zone. As compared to a conventional arrangement where the cooling plate and the heating film overlap, the heat exchange plate can be directly attached to the battery cell. This ensures a strong bonding strength between the heat exchange plate and the battery cell, and implements balanced cooling and heating for the battery cell on the side of the battery cell.

In some embodiments of this application, the cooling zone and the heating zone of the heat exchange plate body do not overlap with each other.

Because the cooling zone and the heating zone do not overlap, the heat exchange plate can be directly bonded to the battery cells without the heating film in between, ensuring high bonding strength and cooling efficiency between the heat exchange plate and the battery cell. This also allows for thermal management of the battery cell based on heating or cooling needs of different parts of the battery cell, thereby ensuring temperature uniformity across the battery cell.

In some embodiments of this application, the packaging plate is welded to the heat exchange plate body in a manner that the heating film is closely attached to the heat exchange plate body.

Because the packaging plate is fixed to the heat exchange plate body through welding, reliable fixation can be achieved. This method features easy operation and simple structure. Moreover, the heating film can be closely attached to the heat exchange plate body through welding connection, which ensures effective heating of adj acent battery cells by the heating film while avoiding adverse situations such as delamination of the heating film.

In some embodiments of this application, the packaging plate is attached to the heating film with a thermally conductive adhesive in between.

Because the thermally conductive adhesive is sandwiched between the packaging plate and the heating film, close contact between the heating film and the heat exchange plate body can be further ensured, facilitating efficient heating of the battery cell. Furthermore, the use of the thermally conductive adhesive helps to evenly transfer heat from the heating film to the packaging plate, ensuring uniform heating of the battery cell.

In some embodiments of this application, the thermally conductive adhesive is thermally conductive silicone gel.

Due to excellent resistance to thermal cycling, anti-aging, and electrical insulation, thermally conductive silicone gel can improve the use reliability and service life of the heat exchange plate and reduce maintenance costs.

In some embodiments of this application, the packaging plate is welded to the heat exchange plate body at a position avoiding the heating film.

Because the packaging plate is welded to the heat exchange plate body at a position avoiding the heating film, heating performance of the heating film is not compromised by the welding material or the welding position. In addition, multiple or continuous welding can be performed around the heating film at positions avoiding the heating film to increase a compressive force that enables the heating film to be closely attached to the heat exchange plate and the packaging plate.

In some embodiments of this application, the heating film is in a thin sheet form, and the heating film is arranged serpentinely in a closed ring or a non-closed shape within the heating zone. The packaging plate includes a peripheral welding portion and a central welding portion, where the peripheral welding portion surrounds the heating film at edge of the heating zone, and the central welding portion is formed in the heating zone at a position different from the peripheral welding portion and avoiding the heating film.

Because a thin sheet-like heating film is used, the heat exchange plate can be made thinner. The heating film is arranged serpentinely in a closed ring or non-closed shape within the heating zone, so that the heating film can be distributed as evenly as possible throughout the heating zone or uniformly heat the entire heating zone. Because the packaging plate includes the peripheral welding portion and the central welding portion, the peripheral welding portion surrounds the heating film and is formed at the edge of the heating zone, and the central welding portion is located at a position in the heating zone different from the peripheral welding portion and avoiding the heating film. Therefore, welding can be performed around the periphery of the heating zone (that is, the periphery of the packaging plate) to apply compressive force to the heating film, and welding can also be performed in the central portion of the heating zone (the central portion of the packaging plate) to apply compressive force to the heating film, so that the entire heating film is tightly pressed against the heat exchange plate body and the packaging plate, and the heating film in different portions of the heating zone receives approximately consistent stress.

In some embodiments of this application, a cooling flow path is formed in the heat exchange plate body of the cooling zone for the passage of a cooling medium.

Because the cooling flow path is provided for the passage of a cooling medium, the cooling zone can function as a cooling plate when the cooling medium flows, cooling the adjacent battery cells.

In some embodiments of this application, both the heat exchange plate body and the packaging plate are aluminum components.

The use of aluminum components with good heat transfer properties can achieve excellent heat exchange effect.

A second aspect of this application provides a battery, including at least one battery cell and at least one heat exchange plate, where the heat exchange plate is the heat exchange plate according to the first aspect of this application, and the heat exchange plate is disposed near each battery cell.

This enables uniform and efficient cooling and/or heating of the battery cells and the battery, while avoiding issues such as delamination, overheating, and short circuits of the heating film, thereby improving the use reliability and safety of the battery.

In some embodiments of this application, the heat exchange plate is disposed near the first heat exchange surface of each battery cell.

Therefore, the heat exchange plate is disposed near the relatively large heat dissipation surface of the battery cell or near a heat exchange surface of the battery cell with obvious uneven temperature distribution, so as to achieve uniform and efficient cooling and/or heating of the battery cell and the battery.

In some embodiments of this application, the heat exchange plate disposed between adjacent battery cells has a higher heat exchange capacity compared to the heat exchange plate disposed at an end side.

Because the heat exchange plate disposed between adjacent battery cells typically exchanges heat with the adjacent battery cells on both its side, while the heat exchange plate disposed at the end sides typically only exchanges heat with the battery cells at the end sides, the heat exchange plate sandwiched between adjacent battery cells has better heat exchange capacity than the heat exchange plate disposed at the end, helping ensure temperature uniformity for the entire battery.

In some embodiments of this application, in a case that two or more heat exchange plates are provided, the cooling flow path formed in one heat exchange plate body for the cooling medium to pass through is connected in parallel with the cooling flow path formed in another heat exchange plate body.

The cooling flow paths of the heat exchange plates are connected in parallel, so that the cooling flow path in each heat exchange plate can operate independently, thereby improving the cooling efficiency for each battery cell and further ensuring temperature uniformity for the entire battery.

In some embodiments of this application, the battery further includes a second heat management plate disposed near a second heat exchange surface of the battery cell. The heat exchange plate is disposed near the first heat exchange surface in a manner that the cooling zone is farther from the second heat management plate than the heating zone.

The heat exchange plate is disposed near the first heat exchange surface of the battery cell to serve as the first heat management plate. In addition, a second heat management plate for cooling can also be disposed near the second heat exchange surface which is different from the first heat exchange surface, further improving the cooling efficiency. Furthermore, the heat exchange plate is disposed in a manner that the cooling zone is farther from the second heat management plate than the heating zone, further enhancing the overall cooling efficiency and temperature uniformity of the battery.

In some embodiments of this application, the cooling flow path in the second heat management plate is connected in parallel with the cooling flow path in the heat exchange plate.

Connecting the cooling flow paths of each heat management plate in parallel can further improve the cooling efficiency and temperature uniformity of each battery cell and the entire battery.

A third aspect of this application provides an electric apparatus, including the heat exchange plate according to the first aspect or the battery according to the second aspect.

In this way, an electric apparatus using a battery with high reliability and safety is provided, thereby improving the use safety and reducing the maintenance cost of the electric apparatus.

A fourth aspect of this application provides a manufacturing method of battery, including the following steps: providing at least one battery cell; providing at least one heat exchange plate, where the heat exchange plate is the heat exchange plate described in the first aspect of this application; and positioning the heat exchange plate near the battery cells.

In this way, a battery with the following advantages can be manufactured: each battery cell, as well as the entire battery, receive uniform and efficient cooling and/or heating, without occurrence of issues such as delamination, overheating, or short circuit of the heating film. This battery exhibits high reliability and safety in use.

In some embodiments of this application, the method further includes the following steps: providing the second heat management plate; and positioning the heat exchange plate near the first heat exchange surface of the battery and positioning the second heat management plate near the second heat exchange surface of the battery, where the cooling zone of the heat exchange plate is farther from the second heat management plate than the heating zone.

In this way, a battery with improved cooling efficiency and temperature uniformity for the battery cells, as well as further enhanced overall cooling efficiency and temperature uniformity, can be manufactured.

In some embodiments of this application, the step of providing at least one heat exchange plate includes: providing a heating film that is closely attached to the heat exchange plate body and the packaging plate; and welding the packaging plate to the heat exchange plate body at a position surrounding the heating film in the heating zone and at a position avoiding the heating film other than the position surrounding the heating film.

In this way, a battery without issues such as delamination, overheating, or short circuit of the heating film can be manufactured.

This application provides a heat exchange plate capable of implementing one of the following effects, a battery including such heat exchange plate, an electric apparatus including such battery, and a manufacturing method of battery.

It is possible to provide a heat exchange plate that ensures reliable fixation between the heating film and the heat exchange plate body, and is capable of reliably exchanging heat with high safety, without any adverse situations such as delamination of the heating film, overheating of the heating film, or short circuit in the battery cell caused by puncturing of the heating film. In addition, the heat exchange plate can also ensure high bonding strength between the heat exchange plate and the battery cells and implement balanced cooling and heating of the battery cells.

A battery with reliable and efficient heat exchange performance and uniform heat exchange is provided, thereby delivering high reliability and high safety in use.

An electric apparatus with high reliability, high safety, and low maintenance costs is provided.

### BRIEF DESCRIPTION OF DRAWINGS

FIG. 1 is a schematic structural diagram of a vehicle according to an embodiment of this application.
FIG. 2 is an exploded schematic diagram of a structure of a battery box according to an embodiment of this application.
FIG. 3 is a perspective schematic diagram of a heat exchange plate for batteries according to an embodiment of this application.
FIG. 4 is an exploded perspective view of the heat exchange plate shown in FIG. 3.
FIG. 5 is a main view of a heat exchange plate of a battery according to an embodiment of this application.
FIG. 6 is a sectional view along line A-A in FIG. 5.
FIG. 7 is a schematic enlarged view of part B in FIG. 6.
FIG. 8 is a schematic diagram of an assembly state of a heat exchange plate and multiple battery cells according to an embodiment of this application.
FIG. 9 is a schematic diagram of an assembly state of a heat exchange plate, a second heat management plate, and multiple battery cells according to an embodiment of this application.
FIG. 10 is a flowchart of a manufacturing method of battery according to an embodiment of this application.
FIG. 11 is a flowchart of a manufacturing method of battery according to an embodiment of this application.
FIG. 12 is a flowchart of the steps of providing a heat exchange plate according to an embodiment of this application.

### Description of reference signs:

1-vehicle; 10-battery; 11-controller; 12-motor; 20, 20a, 20b, 20c-battery cell; 30-box; 301-first portion; 302-second portion; 100-heat exchange plate; 101-heat exchange plate body; 101A-cooling zone; 101B-heating zone; 102-packaging plate; 103-heating film; 104-accommodating cavity; 105-thermally conductive adhesive; 106-peripheral welding portion; 107-central welding portion; 108-cooling medium inlet; 109-cooling medium outlet; 110-cooling medium flow path; and 200-second heat management plate.

### DESCRIPTION OF EMBODIMENTS

The following describes in detail specific embodiments of this application with reference to the accompanying drawings. The accompanying drawings are merely intended to illustrate the preferred embodiments and shall not be construed as any limitation on this application. In all the accompanying drawings, same parts or elements are indicated by same reference signs.

Persons of ordinary skill in the art can clearly understand advantages and benefits of this application by reading the detailed description of the embodiments below. The following embodiments are merely used to describe the technical solutions of this application more clearly, and therefore are exemplary and do not constitute any limitation on the protection scope of this application.

It should be noted that, unless otherwise stated, the technical terms or scientific terms used in this specification should be the usual meanings understood by persons skilled in the art to which the embodiments of this application belong.

In the description of the embodiments of this application, the orientations or positional relationships indicated by the terms "center", "longitudinal", "transverse", "length", "width", "thickness", "upper", "lower", "front", "rear", "left", "right", "top", "bottom", "inside", "outside", and the like are based on the orientations or positional relationships shown in the accompanying drawings. These terms are merely for the ease and brevity of description of the embodiments of this application rather than indicating or implying that the apparatuses or components mentioned must have specific orientations or must be constructed and manipulated according to specific orientations, and therefore shall not be construed as any limitations on the embodiments of this application.

In addition, in the description of the embodiments of this application, "multiple" means at least two unless otherwise specifically defined.

In the description of some embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

In some embodiments of the embodiments of this application, unless otherwise specified and limited explicitly, terms such as "first," "second," and the like are used for convenience of describing the embodiments of this application and simplifying the description rather than indicating or implying any specific order or importance of the elements referred to.

In the description of the embodiments of the present application, unless otherwise clearly specified and limited, a first feature being "on" or "under" a second feature may mean that the first and second features are in direct contact, or the first and second features are in indirect contact through an intermediary. Moreover, that the first feature is "above", "over", or "on" the second feature may mean that the first feature is directly above or obliquely above the second feature or simply mean that the first feature has a higher level than the second feature. That the first feature is "below", "beneath", and "under" the second feature may mean that the first feature is directly below or obliquely below the second feature or simply mean that the first feature has a lower level than the second feature.

In a battery such as a secondary battery, a cooling plate or other means for thermal management are typically configured. With the widespread use of secondary batteries, there is also a need to heat the batteries. In other words, the thermal management includes not only suppressing temperature rise but also promoting temperature rise when the temperature of the battery is excessively low. Therefore, technical solutions such as attaching a heating film layer to a cooling plate has been proposed in the related technology, which combines both cooling and heating functions for the battery. However, the cooling plate with the heating function in the related technology still have some safety issues.

The inventors of this application have found through observation and study that the heating film layer on the cooling plate with the heating function in the related technology has issues such as delamination. In a case that the heating film layer delaminates, there is a significant safety risk of overheating or even ignition if the heating film continues to be powered for heating. In addition, there are adverse situations that the heating film layer is punctured by metal particles.

Through analysis and research, reasons for the foregoing issues include at least the following. Firstly, during usage of battery cells, swelling, gas production, and even deformation may occur, causing an adhesive layer between the heating film layer and the cooling plate to crack (also known as delamination). Secondly, an adhesive force between the heating film layer and the cooling plate decreases due to repeated thermal cycling, making the heating film layer prone to delamination. Thirdly, because the cooling plate is attached to the battery cell through the heating film layer, delamination of the heating film layer leads to poor cooling of the battery cell and poses safety hazards. Fourthly, because the heating film directly are in direct contact with the cooling plate and the battery cell, metal particles in the battery may pierce the heating film, causing short circuits and potential fire hazards.

In view of the foregoing issues, the inventors of this application have conducted research and found that these problems can be addressed by incorporating a heat exchange plate with a specific structure in the battery. In other words, this application provides a heat exchange plate capable of reliably perform heat exchange for cooling and heating, without experiencing issues like delamination, overheating, or puncturing of the heating film, a battery using such heat exchange plate, an electric apparatus including such battery, and a manufacturing method of battery.

The battery involved in this application may be any battery, for example, a battery module and a battery pack, or a primary battery and secondary battery. For example, the secondary battery includes a nickel metal hydride battery, a nickel-cadmium battery, a lead-acid (or lead storage) battery, a lithium-ion battery, a sodium-ion battery, a polymer battery, and the like. Such battery is applicable to various electric devices that use batteries, for example, mobile phones, portable devices, notebook computers, electric bicycles, electric toys, electric tools, electric vehicles, ships, and spacecrafts. For example, spacecrafts include airplanes, rockets, space shuttles, and spaceships. The battery is used to supply electrical energy to these electric devices.

It should be understood that the technical solutions described in the embodiments of this application are not only applicable to the batteries and electric devices described above, but also applicable to all batteries and electric devices using batteries. However, for brevity of description, in the following embodiments, the electric vehicle is used as an example for description. Apparently, the application scenarios for the batteries involved in the embodiments of this application and the electric devices involved in the embodiments of this application are neither limited to electric vehicles.

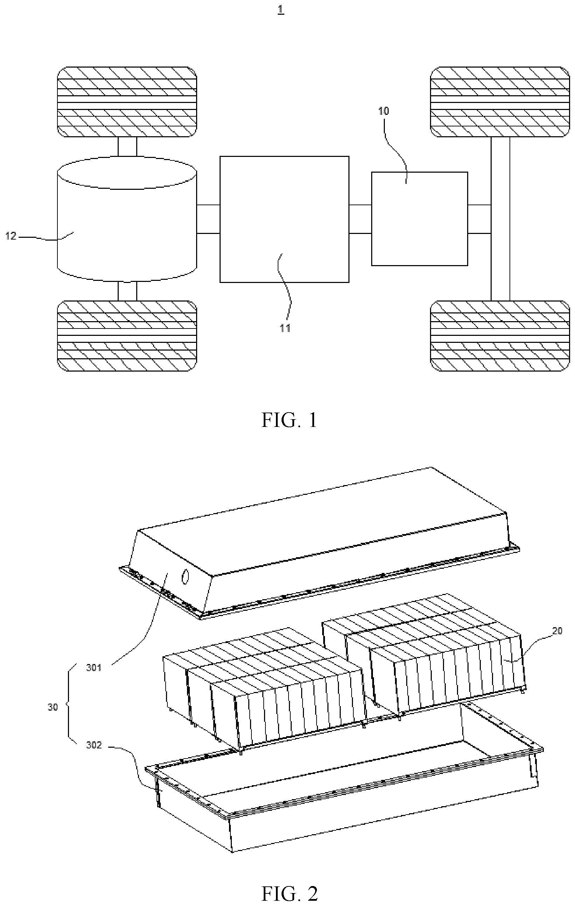

FIG. 1 is a schematic structural diagram of a vehicle 1 according to an embodiment of this application. As shown in FIG. 1, the vehicle 1 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1 is provided with a battery 10 inside, where the battery 10 may be disposed at the bottom, front, or rear of the vehicle 1. The battery 10 may be configured to supply power to the vehicle 1. For example, the battery 10 may be used as an operationally power source for the vehicle 1. The vehicle 1 may further include a controller 11 and a motor 12, where the controller 11 is configured to control the battery 10 to supply power to the motor 12, for example, to satisfy power needs for start, navigation, and driving of the vehicle 1.

In some embodiments of this application, the battery 10 can be used as not only the operational power supply for the vehicle 1 but also a driving power supply for the vehicle 1, replacing all or a part of the fossil fuel or the natural gas to provide driving power for the vehicle 1.

To meet different requirements for power use, the battery 10 may include multiple battery cells 20. A battery cell 20 is a smallest element constituting a battery module or a battery pack. The multiple battery cells 20 can be connected in series and/or in parallel through an electrode terminal for various application scenarios. The battery involved in this application may include a battery module, a battery pack, or the like. The multiple battery cells 20 may be connected in series, parallel, or series-parallel, where being connected in series-parallel means a combination of series and parallel connections. The battery 10 in some embodiments of this application may be directly formed by multiple battery cells 20, or a battery module may be formed first, and then the battery module form a battery.

FIG. 2 schematically illustrate a structure of a battery 10 according to an embodiment of this application. As shown in FIG. 2, the battery 10 may include a box 30 and at least one battery cell 20 accommodated in the box 30. The box 30 accommodates the battery cells 20 to prevent liquid or other foreign matter from affecting charge or discharge of the battery cells 20. The box 30 may be a simple three-dimensional structure such as a separate rectangular structure, a cylindrical structure, or a spherical structure, or may be a complex three-dimensional structure formed by combination of simple three-dimensional structures such as a rectangular structure, a cylindrical structure, or a spherical structure. This is not limited in the embodiments of this application. The box 30 may be made of an alloy material such as aluminum alloy and iron alloy, a polymer material such as polycarbonate and polyisocyanurate foam, or a composite material produced from materials such as glass fibers and epoxy resin. This is not limited in the embodiments of this application either.

In some embodiments, the box 30 may include a first portion 301 and a second portion 302. The first portion 301 and the second portion 302 fit together to jointly define a space for accommodating the battery cells 20. The second portion 302 may be a box structure with one end open, and the first portion 301 may be a plate structure, where the first portion 301 covers the open side of the second portion 302 for the first portion 301 and the second portion 302 to jointly define a space for accommodating the battery cells 20. Alternatively, the first portion 301 and the second portion 302 may both be box structures with one side open, where the open side of the first portion 301 is engaged with the open side of the second portion 302.

In some embodiments, the battery cell 20 may be a lithium-ion battery, a sodium-ion battery, a magnesium-ion battery, or the like. This is not limited in the embodiments of this application. The battery cell 20 may be cylindrical, flat, rectangular, or another shape. This is not limited in the embodiments of this application either. The battery cells 20 are typically divided into three types by packaging method: cylindrical battery cell, prismatic battery cell, and pouch battery cell. The type of battery is not limited in the embodiments of this application either. However, considering factors such as ensuring adhesive strength and cooling effectiveness, the embodiments of this application are particularly suitable for batteries in which the surface in contact with the heat exchange plate is substantially flat.

In addition, although not particularly illustrated, the battery cell 20 in the embodiments of this application typically includes an end cover, a housing, and a cell assembly.

The end cover refers to a component that covers an opening of the housing to isolate an internal environment of the battery cell 20 from an external environment. Without limitation, a shape of the end cover may be adapted to that of the housing, so that the end cover can fit the housing. Optionally, the end cover may be made of a material with certain hardness and strength (for example, aluminum alloy), so that the end cover is less likely to deform under extrusion and collision, enabling the battery cell 20 to have higher structural strength and improved safety performance. The end cover may be provided with functional components such as an electrode terminal. The electrode terminal may be configured to be electrically connected to the cell assembly for outputting or inputting electrical energy of the battery cell 20. The end cover may also be made of various materials, such as copper, iron, aluminum, stainless steel, aluminum alloy, and plastic, which are not particularly limited in the embodiments of this application. In some embodiments, an insulator may further be provided at an inner side of the end cover. The insulator can be configured to isolate electrical connection parts in the housing from the end cover, so as to reduce a risk of short circuit. For example, the insulator may be made of plastic, rubber, or the like.

The housing is an assembly configured to form the internal environment of the battery cell 20 together with the end cover, where the formed internal environment may be used to accommodate the cell assembly, an electrolyte (not shown in the figure), and other components. The housing and the end cover may be separate components, and an opening may be provided in the housing, so that the end cover can close the opening to form the internal environment of the battery cell. Without limitation, the end cover and the housing may also be integrated. Specifically, the end cover and the housing may form a shared connection surface before other components are disposed inside the housing, and then the end cover covers the housing when inside of the housing needs to be enclosed. The housing may be of various shapes and sizes, such as a rectangular shape, a cylindrical shape, and a hexagonal prism shape. Specifically, the shape of the housing may be determined based on a specific shape and size of a cell assembly. The housing may be made of various materials, for example, copper, iron, aluminum, stainless steel, aluminum alloy, and plastic. This is not particularly limited in the embodiments of this application. The embodiments of this application are described by using a cylindrical battery cell 20 as an example. Therefore, the housing of the battery cell 20 is, for example, cylindrical.

The cell assembly is a component in which electrochemical reactions take place in the battery cell 20. There may be one or more cell assemblies in the housing. The cell assembly is mainly formed by winding or stacking a positive electrode plate and a negative electrode plate, and a separator is generally disposed between the positive electrode plate and the negative electrode plate. The parts with active substances on the positive electrode plate and the negative electrode plate constitute a body portion of the cell assembly, and the parts without active substances on the positive electrode plate and the negative electrode plate each constitute a tab (not shown in the figure). A positive tab and a negative tab may both be located at one end of the body portion or be located at two ends of the body portion respectively. During charge and discharge of the battery, a positive electrode active substance and a negative electrode active substance react with an electrolyte, and the tabs are connected to electrode terminals to form a current loop.

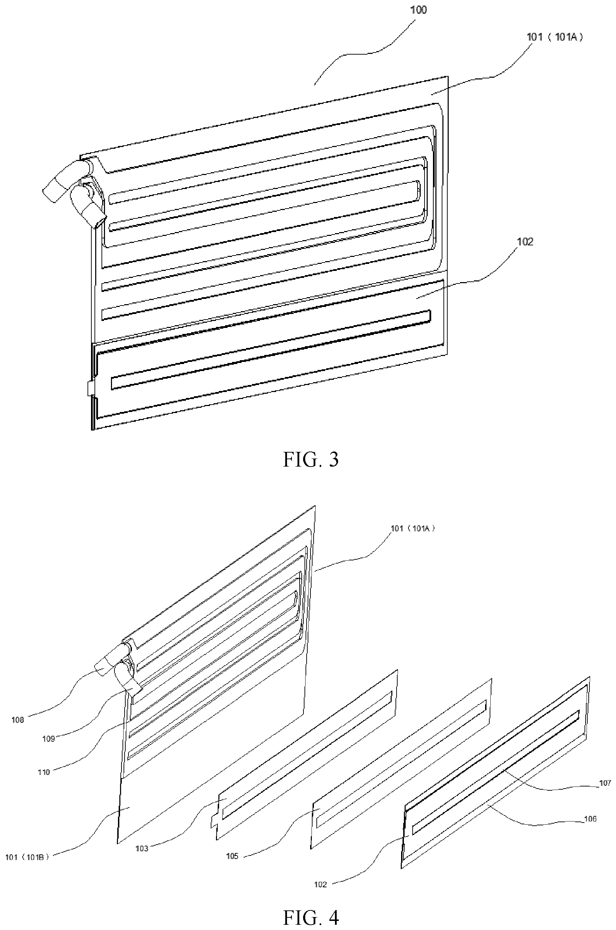

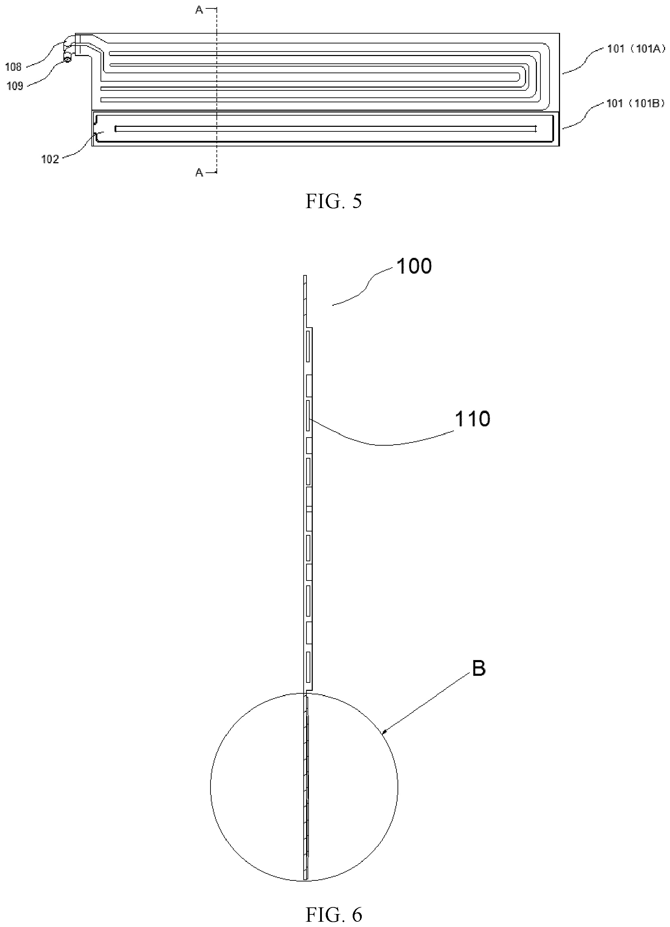

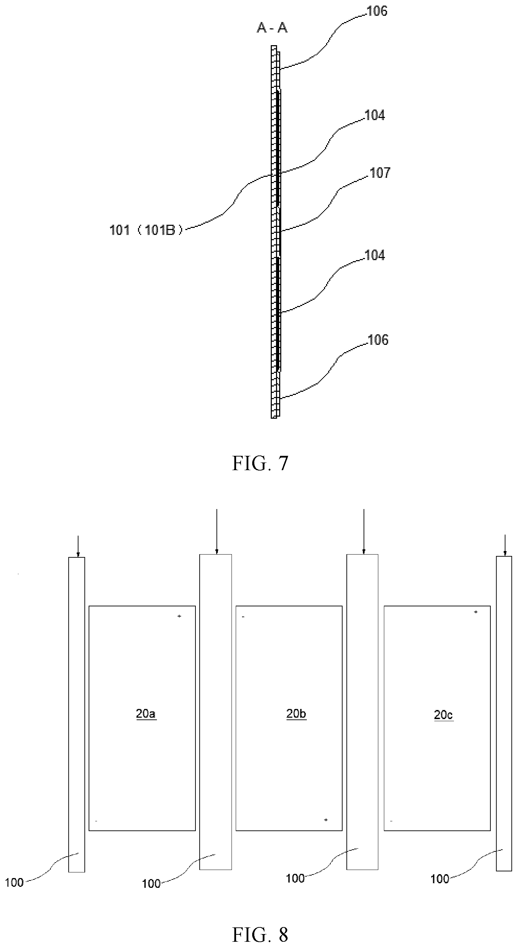

FIG. 3 schematically shows a three-dimensional structure of a heat exchange plate 100 applied in the foregoing battery. FIG. 4 is an exploded view of the heat exchange plate 100 according to an embodiment of this application. FIG. 5 is a front view of the heat exchange plate 100 according to an embodiment of this application. FIG. 6 is a sectional view along A-A. FIG. 7 is an enlarged view of section B in FIG. 6.

As shown in FIG. 3 to FIG. 7, in some embodiments of this application, the heat exchange plate 100 for battery includes a heat exchange plate body 101 and a packaging plate 102. The heat exchange plate body 101 has a cooling zone 101A and a heating zone 101B. The packaging plate 102 is fixedly mounted on the heat exchange plate body 101, where an accommodating cavity 104 (referring to FIG. 7) is formed between the packaging plate 102 and the heating zone 101A of the heat exchange plate body 101, and the accommodating cavity 104 is provided with a heating film 103.

The heat exchange plate 100 herein functions as a part of the thermal management system in the battery, providing cooling and heating functions. The heat exchange plate body 101 of the heat exchange plate 100 includes a cooling zone 101A and a heating zone 101B. In the cooling zone 101A, cooling flow paths or the like can be configured to cool the battery cell. In the heating zone 101B, a heating film or the like can be configured to heat the battery cell.

As shown in FIG. 3 and FIG. 4, the heat exchange plate body 101 is in a flat plate shape and typically has an interconnected cavity in the cooling zone 101A. Therefore, the heat exchange plate body 101 can be formed through forming processes such as stamping or blow molding, or formed by welding.

The packaging plate 102, as shown in FIG. 4 and FIG. 7, is generally flat with a slight elevation in the central body. Thus, when the packaging plate 102 is fitted onto the heat exchange plate body 101, a flat cavity, that is, the accommodating cavity 104, is formed between the packaging plate 102 and the heat exchange plate body 101. The accommodating cavity 104 accommodates the heating film 103. In other words, the heating film 103 is fixed to the heat exchange plate body 101 by being sandwiched between the heat exchange plate body 101 (heating zone 101B) and the packaging plate 102.

The heating film 103, for example, has resistance wires inside and insulation materials outside, enabling electrical heating. The heating film 103 is generally in the form of a thin film and has a shape that substantially matches the internal space of the accommodating cavity 104. Thickness of the heating film 103 is not particularly limited and can be, for example, around 0.5 mm.

In the case of using such heat exchange plate 100 for cooling the battery cell 20, the heat exchange plate body 101, particularly the cooling zone 101A of the heat exchange plate body 101, can be directly attached to the battery cell 20. The packaging plate 102 can also be directly attached to the battery cell 20. When the heat exchange plate 100 is between adjacent batteries as shown in FIG. 8, both sides of the heat exchange plate 100 can be attached to the batteries.

Therefore, because the heating film 103 is packaged between the heat exchange plate body 101 and the packaging plate 102 fixed to the heat exchange plate body 101, the reliable fixation between the heating film 103 and the heat exchange plate body 101 is ensured. Such arrangement also prevents delamination and fall-off due to direct contact between the heating film 103 and its adjacent battery cells 20. In addition, even if the battery cells swell or deform during use, the heating film 103 is less likely to delaminate or fall off.

Additionally, since the heating film 103 is packaged and protected by the heat exchange plate body 101 and the packaging plate 102, adverse situations such as a short circuit in the battery cell due to metal particles in the battery piercing the heating film 103 can be avoided.

Furthermore, the heat exchange plate body 101 is divided into the cooling zone 101A and the heating zone 101B, as compared to a conventional arrangement that the cooling plate and the heating film overlap, the heat exchange plate 100 can be directly attached to the battery cell 20. This ensures a strong bonding strength between the heat exchange plate 100 and the battery cell 20, enabling balanced cooling and heating for the battery cell 20 from the side of the battery cell 20.

In some embodiments of this application, as shown in FIG. 3 to FIG. 6, the cooling zone 101A and the heating zone 101B of the heat exchange plate body 101 do not overlap.

The "not overlap" includes any of the cases of partial non-overlapping and full non-overlapping.

Since the cooling zone 101A and the heating zone 101B do not overlap, the heat exchange plate 100 can be directly attached to the battery cell 20 without the heating film 103 in between. This ensures a high bonding strength and cooling efficiency between the heat exchange plate 100 and the battery cell 20.

This also allows for thermal management of the battery cell 20 based on heating or cooling demands of different portions the battery cell 20, ensuring overall temperature uniformity of the battery cell 20. For example, in a battery shown in FIG. 2, a central portion in the height direction (up and down direction in FIG. 2) of the battery cell 20 is typically considered to have a relatively high temperature. Therefore, in the case of attaching the heat exchange plate 100 of this application to the battery cell 20, the cooling zone 101A can be made overlap more with the central portion in the height direction of the battery cell 20, so that the heating zone 101B is mainly positioned at the end sides in the height direction of the battery cell 20. This helps to ensure temperature uniformity among the battery cells 20.

In some embodiments of this application, as shown in FIG. 6 and FIG. 7, the packaging plate 102 is welded to the heat exchange plate body 101 in a manner that the heating film 103 is closely attached to the heat exchange plate body 101.

Being closely attached refers to that the heating film 103 is in close contact with the heat exchange plate body 101. In addition, the close contact between the heating film 103 and the heat exchange plate body 101 is mainly achieved by a compressive applied by the packaging plate 102. Adhesive can be applied or not applied between the heating film 103 and the heat exchange plate body 101. The close contact between the heating film 103 and the plate surfaces of the heat exchange plate body 101 and the packaging plate 102 allows for efficient transfer of heat from the heating film 103 to the battery cell 20 via the two plates, thereby improving heating efficiency.

Regarding the welding method of the packaging plate 102, spot welding, laser penetration welding, or the like can be used. Any suitable welding method can be used, provided that the packaging plate 102 is welded to the heat exchange plate body 101. Certainly, other connection methods that securely fix the packaging plate 102 can also be used.

As illustrated previously, because the packaging plate 102 is fixed to the heat exchange plate body 101 through welding, reliable fixation can be achieved with easy operation and simple structure. Moreover, the heating film 103 can be closely attached to the heat exchange plate body 101 through welding connection, which ensures effective heating of adjacent battery cells 20 by the heating film 103 while avoiding adverse situations such as delamination of the heating film 103.

In some embodiments of this application, as shown in FIG. 4, the packaging plate 102 is closely attached to the heating film 103 through a thermally conductive adhesive 105.

Specifically, to further ensure that the heating film 103 is closely attached to the heat exchange plate body 101 and the packaging plate 102, a compressible thermally conductive material, for example, the thermally conductive adhesive 105 like thermally conductive silicone gel, is sandwiched between the heating film 103 and the packaging plate 102. In addition, to ensure uniform stress distribution on the heating film 103, preferably, the thermally conductive adhesive 105 has a shape that is substantially the same as the shape of the heating film 103.

Because the thermally conductive adhesive 105 is sandwiched between the packaging plate 102 and the heating film 103, close contact between the heating film 102 and the heat exchange plate body 101 can be further ensured, facilitating efficient heating of the battery cell 20. Furthermore, the use of the thermally conductive adhesive 105 helps to evenly transfer heat from the heating film 103 to the packaging plate 102, ensuring uniform heating of the battery cell 20.

In some embodiments of this application, the thermally conductive adhesive 105 is thermally conductive silicone gel.

Due to excellent resistance to thermal cycling, anti-aging, and electrical insulation, thermally conductive silicone gel can improve the use reliability and service life of the heat exchange plate 100 and reduce maintenance costs.

In some embodiments of this application, as shown in FIG. 3, FIG. 4, and FIG. 7, the packaging plate 102 is welded to the heat exchange plate body 101 at a position avoiding the heating film 103.

Specifically, the position on the packaging plate 102 avoiding the heating film 103 corresponds to the position on the packaging plate 102 that does not have the heating film 103 in the accommodating cavity 104. In a case that the heating film 103 is formed in a ring shape as shown in FIG. 4, the position on the packaging plate 102 avoiding the heating film 103 includes an edge portion of the packaging plate 102 located around the heating film 103 and a portion corresponding to the middle position enclosed by the ring-shaped heating film 103. In a case that the heating film 103 is formed in a straight line shape, the position on the packaging plate 102 avoiding the heating film 103 includes a portion of the packaging plate 102 that encloses the straight-line heating film 103. In the case that the heating film 103 fills the entire accommodating cavity 104 in a sheet-like shape, the position on the packaging plate 102 avoiding the heating film 103 includes the edge portion of the packaging plate 102 located around the heating film 103. The welding includes spot welding, continuous welding, and the like.

Because the packaging plate 102 is welded to the heat exchange plate body 101 at a position avoiding the heating film 103, heating performance of the heating film 103 is not compromised by the welding material or the welding position. In addition, multiple or continuous welding can be performed around the heating film 103 at positions avoiding the heating film 103 to increase a compressive force that enables the heating film 103 to be closely attached to the heat exchange plate 100 and the packaging plate 102.

In some embodiments of this application, as shown in FIG. 4, the heating film 103 is in a thin sheet form. The heating film 103 is arranged serpentinely in the heating zone 101B in a closed ring or in a non-closed shape, and the packaging plate 102 includes a peripheral welding portion 106 and a central welding portion 107. The peripheral welding portion 106 surrounds the heating film 103 at edge of the heating zone 101B, and the central welding portion 107 is located at a position in the heating zone 101B different from the peripheral welding portion 106 and avoiding the heating film 103.

Regarding the specific shape of the heating film 103, FIG. 4 shows a closed ring shape as an example, but the heating film 103 can also be arranged serpentinely in a non-closed shape, provided that it can uniformly provide sufficient heat within the accommodating cavity 104.

The peripheral welding portion 106 of the packaging plate 102, as shown in FIG. 3 to FIG. 5, surrounds the heating film 103 at the edge of the heating zone 101B and is closer to the heat exchange plate body 101 compared to the central portion of the packaging plate 102 that forms the accommodating cavity 104. The peripheral welding portion 106 can be continuously formed around the periphery of the heating film 103 or, as shown in FIG. 5, can have an opening at an end of the packaging plate 102 to allow a portion of the heating film 103 to extend out and connect with power lines or the like.

The central welding portion 107 of the packaging plate 102, as shown in FIG. 3 to FIG. 5, is formed in a linear shape that matches the shape of the heating film 103, and fills the central space enclosed by the ring-shaped heating film 103. In the packaging plate 102, the central welding portion 107 is closer to the heat exchange plate body 101 due to its recess towards the surface of the packaging plate 102 that forms the accommodating cavity 104. Certainly, when the heating film 103 is formed in a serpentine shape, the central welding portion 107 may also be formed in a serpentine shape that matches the shape of the heating film 103.

Through the synergistic cooperation of the peripheral welding portion 106 and the central welding portion 107, a large compressive force is applied to the entire heating film 103, enabling the heating film 103 to be closely attached to the heat exchange plate body 101 and the packaging plate 102, and minimizing the occurrence of local detachment. Even if the heat exchange plate 100 is relatively large, a resulting heating zone 101B is relatively large, the heating film 103 needs to be arranged in the enlarged zone, and the packaging plate 102 is also enlarged, the entire heating film 103 can still be subjected to uniform compressive force and closely attached to the heat exchange plate body 101 and the packaging plate 102, ensuring uniform heating of the battery cell 20.

As mentioned above, because a thin sheet-like heating film 103 is used, the heat exchange plate 100 can be made thinner, thereby avoiding causing the battery 10 to be excessively large due to the heat exchange plate 100. The heating film 103 is arranged serpentinely in a closed ring or non-closed shape within the heating zone 101B, so that the heating film 103 can be distributed as evenly as possible throughout the heating zone or uniformly heat the entire heating zone.

Because the packaging plate 102 includes the peripheral welding portion 106 and the central welding portion 107, the peripheral welding portion 106 surrounds the heating film 103 and is formed at the edge of the heating zone 101B, and the central welding portion 107 is located at a position in the heating zone 101B different from the peripheral welding portion 106 and avoiding the heating film 103. Therefore, welding can be performed around the periphery of the heating zone 101B (that is, the periphery of the packaging plate 102) to apply compressive force to the heating film 103, and welding can also be performed in the central portion of the heating zone 101B (the central portion of the packaging plate) to apply compressive force to the heating film 103, so that the entire heating film 103 is tightly pressed against the heat exchange plate body 101 and the packaging plate 102, and the heating film 103 in different portions of the heating zone receives approximately consistent stress.

In some embodiments of this application, as shown in FIG. 3 to FIG. 6, a cooling flow path 110 is formed in the heat exchange plate body 101 of the cooling zone 101A for the passage of a cooling medium.

Specifically, the cooling flow path can be formed by interconnected pipe cavities within the heat exchange plate body 101 (cooling zone 101A). In addition, as shown in FIG. 3 to FIG. 5, a cooling medium inlet 108 and a cooling medium outlet 109 are provided at the end of the heat exchange plate body 101. In each heat exchange plate 100, the cooling medium can enter the heat exchange plate body 101 through the cooling medium inlet 108, circulate through the internal cooling flow path for heat exchange, and then exit through the cooling medium outlet 109, flowing into the overall cooling medium supply pipeline (not shown in the figure). The cooling flow paths of the heat exchange plates 100 can be connected in series or in parallel. Considering higher cooling efficiency and balanced cooling, parallel connection is preferred.

Because the cooling flow path is provided for the passage of a cooling medium, the cooling zone 101A can function as a cooling plate when the cooling medium flows, cooling the adjacent battery cells 20.

In some embodiments of this application, both the heat exchange plate body 101 and the packaging plate 102 are aluminum components.

The use of aluminum components with good heat transfer properties can achieve excellent heat exchange effect.

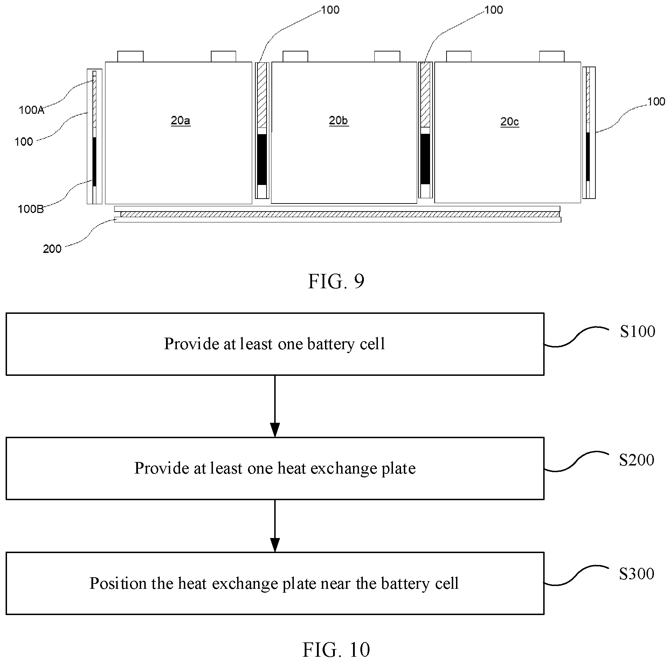

According to a second aspect of this application, a battery is provided, as shown in FIG. 8 or FIG. 9. The battery includes at least one battery cell 20 and at least one heat exchange plate 100. The heat exchange plate 100 is the heat exchange plate 100 described in the first aspect of this application and is positioned near the battery cells 20.

Specifically, in FIG. 8, three battery cells 20 and four heat exchange plates 100 are shown as an example, but persons skilled in the art should understand that the number of battery cells and heat exchange plates is not limited to this and can be arbitrarily set based on needs. In addition, the number of heat exchange plates 100 can be more than, less than, or equal to the number of battery cells 20, provided that the overall cooling and heating requirements of the battery 10 are met and can be adjusted based on needs.

Regarding the positions of the heat exchange plate 100 and the battery cell 20, the heat exchange plate 100 is typically disposed near one or more battery cells 20 and can be in contact with the battery cells for better heat exchange effect. In addition, the heat exchange plate 100 can be disposed near one side, two sides, all sides, or any end surface of the battery cell 20.

In an example shown in FIG. 8, the heat exchange plate 100 is configured between adjacent battery cells 20a and 20b, as well as between battery cells 20b and 20c. When battery cells 20a and 20c are end cells in a battery group, the heat exchange plate 100 is also disposed near the side surfaces of these two battery cells. In addition, FIG. 8 only shows the configuring of the heat exchange plate 100 near two sides of the battery cells, but the heat exchange plate 100 can also be disposed near other sides of the battery cells.

This enables uniform and efficient cooling and/or heating of the battery cells 20 and the battery 10, while avoiding issues such as delamination, overheating, and short circuits of the heating film, thereby improving the use reliability and safety of the battery.

In some embodiments of this application, as shown in FIG. 8, the heat exchange plates 100 are disposed near a first heat exchange surface of each battery cell 20.

Taking the prismatic battery cell shown in FIG. 2 as an example, the heat exchange plate of the battery cell includes a heat exchange surface facing the battery cell in the arrangement direction, referred to as the first heat exchange surface (sometimes referred to as a side surface of the battery cell). It further includes a heat exchange surface facing the casing, referred to as a second heat exchange surface. When an area of the first heat exchange surface is larger than that of the second heat exchange surface, the heat exchange plate 100 is at least disposed near the first heat exchange surface.

In addition, for a configuring direction of the heat exchange plate 100, the heat exchange plate 100 is configured in a manner that the heat exchange surfaces face the heat exchange surfaces of the battery cells. Furthermore, because the central portion of the battery cell 20 is generally considered to have the most complete chemical reaction and the highest temperature rise, it is preferable to configure the cooling zone 101A of the heat exchange plate 100 to be as close as possible to the heat exchange surface of the central portion of the battery cell 20.

Therefore, the heat exchange plate 100 is disposed near the relatively large heat dissipation surface of the battery cell 20 or near a heat exchange surface of the battery cell 20 with obvious uneven temperature distribution, so as to achieve uniform and efficient cooling and/or heating of the battery cell and the battery.

In some embodiments of this application, as shown in FIG. 8, the heat exchange plate 100 configured between adjacent battery cells 20 have higher heat exchange capacity compared to the heat exchange plate 100 configured at the end sides.

Because the heat exchange plate 100 configured between adjacent battery cells 20 typically exchange heat with both adjacent battery cells 20, it is necessary to increase the heat exchange capacity of the heat exchange plate 100 that perform heat exchange on both sides to ensure uniform heat exchange for the entire battery. The heat exchange capacity refers to the ability to exchange more heat, which can be achieved by increasing a cross-sectional area of the cooling flow path, increasing a flow speed of the cooling medium, increasing the heating power of the heating film, or using two heat exchange plates 100 in parallel. In FIG. 8, as an example, a longer arrow indicates that the flow speed of the cooling medium of the heat exchange plate 100 positioned in the middle is greater than that of the heat exchange plates positioned on the sides.

As mentioned above, because the heat exchange plate 100 configured between adjacent battery cells 20 typically exchanges heat with both adjacent battery cells 20, and the heat exchange plate 100 configured at the end sides typically only exchanges heat with the end battery cells 20, having a heat exchange plate 100 sandwiched between adjacent battery cells 20 with a heat exchange capacity better than a heat exchange plate 100 disposed near the battery cell 20 at the end side helps ensure temperature uniformity for the entire battery.

In some embodiments of this application, as shown in FIG. 8, in a case that there are more than two heat exchange plates 100, the cooling flow path formed in any heat exchange plate body 101 for the passage of the cooling medium is connected in parallel with the cooling flow path formed in another heat exchange plate body 101 for the passage of a cooling medium.

The cooling flow paths of the heat exchange plates 100 are connected in parallel, so that the cooling flow path in each heat exchange plate can operate independently, thereby improving the cooling efficiency for each battery cell and further ensuring temperature uniformity for the entire battery.

In some embodiments of this application, as shown in FIG. 9, the battery further includes a second heat management plate 200 disposed near the second heat exchange surface of the battery cells 20. The heat exchange plate 100 is disposed near the first heat exchange surface in a manner that the cooling zone 101A is farther from the second heat management plate 200 than the heating zone 101B.

In the example shown in FIG. 9, heat exchange plates 100 are configured between adjacent battery cells 20a, 20b, 20c, and a second heat management plate 200 is also disposed near the end surface of the battery cells (such as the bottom end surface in FIG. 9). As an example, the second heat management plate 200 is composed of a cooling plate. The cooling plate can adopt a known cooling plate structure. Further, the heat exchange plate 100 may be referred to as the first heat management plate. Because the battery cells are cooled from the side and bottom surfaces, the safety of the battery is further improved.

Furthermore, considering the temperature uniformity of the battery cells, the heat exchange plate 100, serving as the first heat management plate, is configured in a manner that the heating zone 101B is closer to the second heat management plate 200 than in the cooling zone 101A.

As described above, the heat exchange plate 101 is disposed near the first heat exchange surface of the battery cell 20, serving as the first heat management plate. In addition, a cooling second heat management plate 200 which is different from the first heat exchange surface can be further disposed near the second heat exchange surface, to further improve the cooling efficiency. Furthermore, the heat exchange plate 100 is configured in a manner that the cooling zone 101A is farther from the second heat management plate 200 than the heating zone 101B, further enhancing the overall cooling efficiency and temperature uniformity of the battery.

In some embodiments of this application, as shown in FIG. 9, the cooling flow path in the second heat management plate 200 is connected in parallel with the cooling flow path in the heat exchange plate 100.

Regarding the specific configuration of the cooling flow system for the battery and the cooling flow path in the heat exchange plate 100, as well as the configuration of the cooling flow path in the second heat management plate 200, any known methods can be used, provided that the basic functions described above are achieved. In this way, the cooling flow paths between each heat exchange plate 100 and the cooling flow paths between the heat exchange plate 100 and the second heat management plate 200 are connected in parallel with each other, each can circulate independently, thereby further improving the cooling efficiency and temperature uniformity of each battery cell and the entire battery.

According to a third aspect of this application, an electric apparatus is provided. As shown in FIG. 1, the electric apparatus includes the heat exchange plate 100 described in the first aspect, or the battery 10 described in the second aspect.

In this way, an electric apparatus using a battery with high reliability and safety is provided, thereby improving the use safety and reducing the maintenance cost of the electric apparatus.

According to a fourth aspect of this application, a manufacturing method of battery is provided. As shown in FIG. 10, the manufacturing method includes the following steps: providing at least one battery cell 20 (step S100); providing at least one heat exchange plate 100, where the heat exchange plate 100 is the heat exchange plate 100 described in the first aspect of this application (step S200); and positioning the heat exchange plate 100 near the battery cells 20 (step S300).

In this way, a battery with the following advantages can be manufactured: each battery cell, as well as the entire battery, receive uniform and efficient cooling and/or heating, without occurrence of issues such as delamination, overheating, or short circuit of the heating film. This battery exhibits high reliability and safety in use.

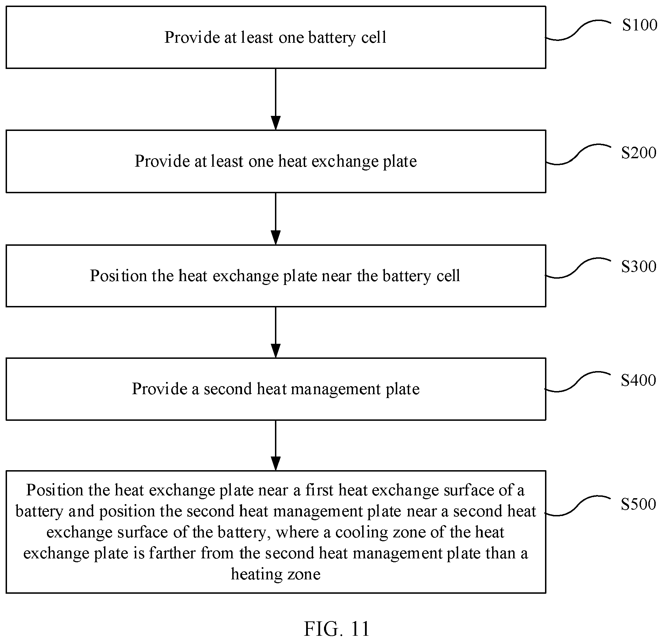

In some embodiments of this application, as shown in FIG. 11, the method further includes the following steps: providing the second heat management plate 200 (step S400); and positioning the heat exchange plate 100 near the first heat exchange surface of the battery and positioning the second heat management plate 200 near the second heat exchange surface of the battery, where the cooling zone 101A of the heat exchange plate 100 is farther from the second heat management plate 200 than the heating zone 101B (step S500).

In this way, a battery with improved cooling efficiency and temperature uniformity for the battery cells, as well as further enhanced overall cooling efficiency and temperature uniformity, can be manufactured.

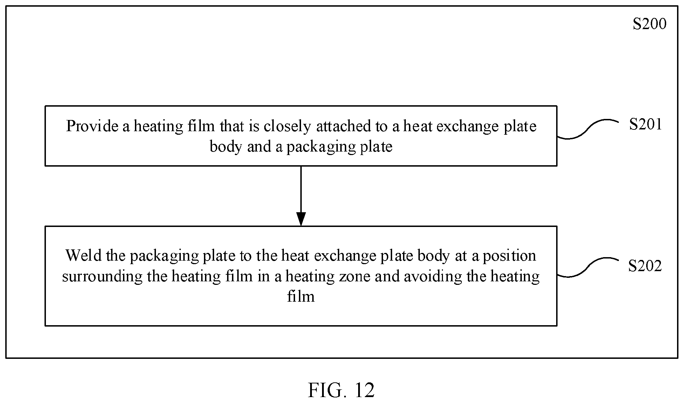

In some embodiments of this application, as shown in FIG. 12, the step (step S200) of providing at least one heat exchange plate includes: providing a heating film that is closely attached to the heat exchange plate body and the packaging plate (step S201); and welding the packaging plate to the heat exchange plate body at a position surrounding the heating film in the heating zone and avoiding the heating film (step S202).

In this way, a battery without issues such as delamination, overheating, or short circuit of the heating film can be manufactured.

As an example, the following describes specific embodiments of this application.

As shown in FIG. 9, an application example of the heat exchange plate 100 according to some embodiments of this application is shown. The battery shown in FIG. 9, for example, is a battery pack using the CTP (Cell To Package; non-module battery pack) scheme. Each battery cell 20 is directly bonded to a bottom cooling plate serving as a second heat management plate 200, and the battery cells 20 have no side plates and are directly bonded to a heat exchange plate 100 serving as a first heat management plate. Generally, the cooling liquid in the heat exchange plate 100 is designed in a parallel structure to ensure cooling effectiveness. In addition, to ensure temperature consistency among the three rows of battery cells, the flow rate of the middle heat exchange plate 100 between the battery cells is higher than that of the heat exchange plates on the sides, as the middle heat exchange plate 100 dissipates heat generated by the battery cells on both sides.

FIG. 4 is an exploded perspective view of the heat exchange plate 100. The heat exchange plate 100 includes an aluminum-stamped heat exchange plate body 101, a heating film 103, a thermally conductive silicone gel 105, and an aluminum packaging plate 102. The heating film 103 is packaged in the lower half of the heat exchange plate body 101, or the heating zone 101B, by bonding the packaging plate 102 with the heat exchange plate body 101. The upper half of the heat exchange plate body 101, or the cooling zone 101A, functions for cooling. This allows for cooling of the upper zone of the battery cells, which is farthest from the bottom cooling plate serving as the second heat management plate 200, while the heating film 103 heats the battery cells through self-heating using resistance wires and the like.

As shown in FIG. 4 to FIG. 7, the packaging plate 102 includes an accommodating cavity 104 for the heating film 103, a peripheral welding portion 106 for spot welding the edge of the packaging plate, and a central welding portion formed by spot welding grooves. In this way, the heating film 103 is securely packaged in the heat exchange plate body 101 through high-strength connections such as welding.

The foregoing embodiments are illustrative, and persons skilled in the art know that the foregoing constituent elements may be combined, replaced, or omitted.

The foregoing describes the embodiments of this application, but persons skilled in the art should know that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A heat exchange plate for battery, **characterized by** comprising:
a heat exchange plate body, having a cooling zone and a heating zone; and
a packaging plate fixedly mounted on the heat exchange plate body, wherein an accommodating cavity is formed between the packaging plate and the heating zone of the heat exchange plate body, and
a heating film is provided in the accommodating cavity.

2. The heat exchange plate according to claim 1, **characterized in that**
the cooling zone and the heating zone of the heat exchange plate body do not overlap with each other.

3. The heat exchange plate according to claim 1 or 2, **characterized in that**
the packaging plate is welded to the heat exchange plate body in a manner that the heating film is closely attached to the heat exchange plate body.

4. The heat exchange plate according to any one of claims 1 to 3, **characterized in that** the packaging plate is attached to the heating film via a thermally conductive adhesive.

5. The heat exchange plate according to claim 4, **characterized in that**
the thermally conductive adhesive is a thermally conductive silicone gel.

6. The heat exchange plate according to any one of claims 1 to 5, **characterized in that**
the packaging plate is welded to the heat exchange plate body at a position avoiding the heating film.

7. The heat exchange plate according to any one of claims 1 to 6, **characterized in that**
the heating film is in a thin sheet form, and the heating film is arranged serpentinely in a closed ring or a non-closed shape within the heating zone, and
the packaging plate comprises a peripheral welding portion and a central welding portion, wherein the peripheral welding portion surrounds the heating film at edge of the heating zone, and the central welding portion is formed in the heating zone at a position different from the peripheral welding portion and avoiding the heating film.

8. The heat exchange plate according to any one of claims 1 to 7, **characterized in that**
a cooling flow path for a cooling medium to pass through is formed in the heat exchange plate body in the cooling zone.

9. The heat exchange plate according to claim 1, **characterized in that**
both the heat exchange plate body and the packaging plate are made of aluminum.

10. A battery, **characterized by** comprising at least one battery cell and at least one heat exchange plate, wherein the heat exchange plate is the heat exchange plate according to any one of claims 1 to 9, and the heat exchange plate is disposed at a position near each battery cell.

11. The battery according to claim 10, **characterized in that**
the heat exchange plate is disposed at a position near a first heat exchange surface of each battery cell.

12. The battery according to claim 10 or 11, **characterized in that**
the heat exchange plate disposed between adjacent battery cells has a higher heat exchange capacity compared to the heat exchange plate disposed at an end side.

13. The battery according to any one of claims 10 to 12, **characterized in that**
in a case that two or more heat exchange plates are provided, a cooling flow path for a cooling medium to pass through formed in any one heat exchange plate body is connected in parallel to a cooling flow path for the cooling medium to pass through formed in another heat exchange plate body.

14. The battery according to any one of claims 11 to 13, **characterized in that**
the battery further comprises a second heat management plate disposed near a second heat exchange surface of the battery cell, wherein
the heat exchange plate is disposed near the first heat exchange surface in a manner that the cooling zone is farther from the second heat management plate than the heating zone.

15. The battery according to claim 14, **characterized in that**
the cooling flow path in the second heat management plate is connected in parallel with the cooling flow path in the heat exchange plate.

16. An electric apparatus, **characterized by** comprising the heat exchange plate according to any one of claims 1 to 9, or the battery according to any one of claims 10 to 15.

17. A manufacturing method of battery, **characterized by** comprising the following steps:
providing at least one battery cell;
providing at least one heat exchange plate, wherein the heat exchange plate is the heat exchange plate according to any one of claims 1 to 9; and
positioning the heat exchange plate near each battery cell.

18. The manufacturing method according to claim 17, **characterized by** further comprising the following steps:
providing a second heat management plate; and
positioning the heat exchange plate near a first heat exchange surface of the battery and positioning the second heat management plate near a second heat exchange surface of the battery, wherein the cooling zone of the heat exchange plate is farther from the second heat management plate than the heating zone.

19. The manufacturing method according to claim 17 or 18, **characterized in that**
the steps of providing at least one heat exchange plate comprises:
providing a heating film that is closely attached to the heat exchange plate body and the packaging plate; and
welding the packaging plate to the heat exchange plate body at a position surrounding the heating film in the heating zone and at a position avoiding the heating film other than the position surrounding the heating film.
